(19) Europäisches Patentamt
European Patent Office
Office européen des brevets

(11) Veröffentlichungsnummer : **0 374 623 B1**

(12) # EUROPÄISCHE PATENTSCHRIFT

(45) Veröffentlichungstag der Patentschrift : **27.05.92 Patentblatt 92/22**

(51) Int. Cl.$^5$ : **C08G 64/06,** C08L 69/00

(21) Anmeldenummer : **89122655.7**

(22) Anmeldetag : **08.12.89**

(54) **Polycarbonate aus mehrfach substituierten Cyclohexylidenbisphenolen.**

(30) Priorität : **21.12.88 DE 3842943**
**12.08.89 DE 3926767**

(43) Veröffentlichungstag der Anmeldung : **27.06.90 Patentblatt 90/26**

(45) Bekanntmachung des Hinweises auf die Patenterteilung : **27.05.92 Patentblatt 92/22**

(84) Benannte Vertragsstaaten : **BE DE ES FR GB IT NL**

(56) Entgegenhaltungen :
**DE-A- 2 546 717**
**DE-A- 3 345 945**
**US-A- 2 069 573**
**US-A- 4 368 315**
**PATENT ABSTRACTS OF JAPAN vol. 10, no. 225 (P-484)(2281) 6 August 1986, & JP-A-61 62040**
**PATENT ABSTRACTS OF JAPAN vol. 10, no. 284 (P-501)(2340) 26 September 1986, & JP-A-61 105550**

(56) Entgegenhaltungen :
**PATENT ABSTRACTS OF JAPAN vol. 10, no. 225 (P-484)(2281) 6 August 1986, & JP-A-61 62039**
**SCHNELL,H.: "CHEMISTRY AND PHYSICS OF POLYCARBONATES" 1964, INTERSCIENCE PUBLISHERS, NEW YORK**

(73) Patentinhaber : **BAYER AG**
**W-5090 Leverkusen 1 Bayerwerk (DE)**

(72) Erfinder : **Serini, Volker, Dr.**
**Sebastian-Kneipp-Weg 2**
**W-4150 Krefeld (DE)**
Erfinder : **Freitag, Dieter, Dr.**
**Hasenheide 10**
**W-4150 Krefeld (DE)**
Erfinder : **Idel, Karsten-Josef, Dr.**
**Am Schwarzkamp 38**
**W-4150 Krefeld (DE)**
Erfinder : **Westeppe, Uwe, Dr.**
**Vogelskamp 72**
**W-4020 Mettmann (DE)**
Erfinder : **Grigo, Ulrich, Dr.**
**Michelsheide 9**
**W-4152 Kempen 3 (DE)**
Erfinder : **Paetz, Klaus-Christian, Dr.**
**Rosenkranz 23**
**W-5093 Burscheid-Hilgen (DE)**

EP 0 374 623 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Gegenstand der Erfindung sind thermoplastische aromatische Polycarbonate mit mittleren Molekulargewichten $\overline{Mw}$ von mindestens 10.000, bevorzugt von 10.000 bis 250.000, besonders bevorzugt von 10.000 bis 120.000, ganz besonders bevorzugt von 15.000 - 100.000 und insbesondere 20.000 bis 80.000, die bifunktionelle Carbonatstruktureinheiten der Formel (I)

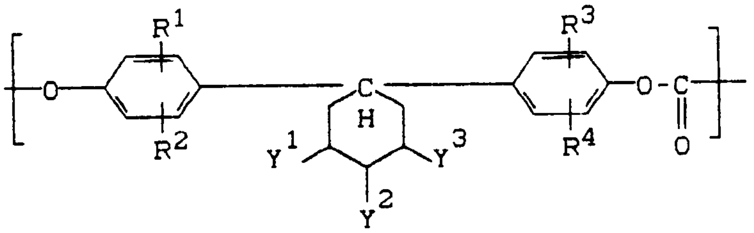

(I)

mit

$R^1$, $R^2$, $R^3$, $R^4$ unabhängig voneinander Wasserstoff, $C_1$ bis $C_{12}$ Kohlenwasserstoff, Halogen

$Y^1$, $Y^2$, $Y^3$ unabhängig voneinander Waserstoff, $C_1$-$C_5$-Alkyl, $C_6$-$C_{12}$-Kohlenwasserstoffrest, wobei mindestens zwei der Reste $Y^1$, $Y^2$ und $Y^3$ ungleich Wasserstoff und mindestens einer der Reste $Y^1$, $Y^2$ und $Y^3$ $C_1$-$C_5$-Alkyl sind,

in Mengen von 100 bis 1 Mol-%, bevorzugt 100 bis 5 Mol-% und besonders bevorzugt 100 bis 20 Mol-%, bezogen auf die Gesamtmenge von difunktionellen Carbonatstruktureinheiten im Polycarbonat, enthalten. Von den genannten Polycarbonaten mit 100 bis 20 Mol-% an bifunktionellen Carbonatstruktureinheiten der Formel (I) werden die mit 100 - 50 Mol-% bevorzugt, die mit 100 - 80 Mol-% besonders bevorzugt und die mit 100 Mol-% ganz besonders bevorzugt.

Die erfindungsgemäßen Polycarbonate weisen gegenüber bekannten Polycarbonaten, z.B. aus Bisphenol A und aus 1,4-Bis-(4-hydroxyphenyl)-cyclohexan, überraschende technologische Eigenschaften auf.

So besitzen sie überraschend hohe Glastemperaturen Tg schon bei kleinen Anteilen an Carbonatstruktureinheiten der Formel (I). Ebenso haben sie ein besonders gutes Entformungsverhalten, außergewöhnlich gute Schmelzfließfähigkeit, insbesondere unter Berücksichtigung der hohen Glastemperatur Tg. Die erfindungsgemäßen Polycarbonate sind außerdem kriechstromfest, hydrolysestabil, UV-stabil und wärmealterungsstabil.

Den Carbonatstruktureinheiten der Formel (I) liegen Biphenole der Formel

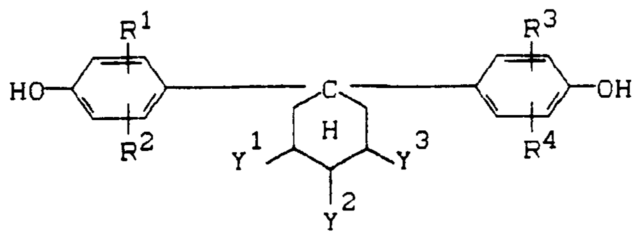

(II)

zugrunde, in der

$R^1$, $R^2$, $R^3$, $R^4$, $Y^1$, $Y^2$ und $Y^3$ die gleiche Bedeutung wie in Formel (I) haben.

In den Formeln (I) und (II) sind $R_1$, $R_2$, $R_3$ und $R_4$ bevorzugt Wasserstoff, Methyl, Ethyl, Phenyl, Cyclohexyl, Chlor und Brom, besonders bevorzugt jedoch Wasserstoff, Methyl und Brom.

Wenn mehr als einer der Reste $R_1$, $R_2$, $R_3$ und $R_4$ ungleich Wasserstoff ist, werden gleiche Substituenten bevorzugt. Wenn zwei der Reste $R_1$, $R_2$, $R_3$ und $R_4$ ungleich Wasserstoff sind, wird die 0,0′-Substitution, bezogen auf die Carbonatgruppen (Formel (I)) bzw. die phenolischen OH-Gruppen (Formel (II)), bevorzugt. Wenn alle vier Reste $R_1$, $R_2$, $R_3$ und $R_4$ ungleich Wasserstoff sind, wird die O,O,O′,O′-Substitution, bezogen wie vor, bevorzugt.

In den Formeln (I) und (II) können $Y^1$, $Y^2$ und $Y^3$ neben Wasserstoff $C_1$-$C_5$-Alkyl, z.B. n-Alkyl, wie Methyl, Ethyl, Propyl, Butyl und Pentyl, bevorzugt Ethyl und Methyl, besonders bevorzugt Methyl und Iso-$C_3$-$C_5$-Alkyl wie Isopropyl, tert.-Butyl, 1-Methylpropyl, 1,1-Dimethylpropyl, 1-Methylbutyl, 1,2-Dimethylpropyl und 2,2-Dimethylpropyl, bevorzugt Isopropyl, tert.-Butyl, 1-Methylpropyl und 1,1-Dimethylpropyl, besonders bevorzugt tert.-Butyl und 1,1-Dimethylpropyl und ganz besonders bevorzugt tert.-Butyl sowie Cyclopentyl sein.

In den Formel (I) und (II) können $Y^1$, $Y^2$ und $Y^3$ neben Wasserstoff auch $C_6$-$C_{12}$-Kohlenwasserstoffreste

wie n-$C_6$-$C_{12}$-Alkyl (z.B. Hexyl, Octyl, Nonyl, Decyl, Dodecyl), Iso-$C_6$-$C_{12}$-Alkyl (z.B. verschiedene Isohexyl-, Isooctyl-, Isononyl und Isododecylreste), $C_6$-$C_{12}$-Cycloalkyl wie Cyclohexyl, mit n-Alkyl oder Isoalkyl substituiertes Cyclohexyl (wie z.B. Methyl-, Ethyl-, Isopropyl- oder tert.-Butyl-Cyclohexyl), Aryl-substituiertes Cyclohexyl (wie z.B. Phenylcyclohexyl) und Cyclohexyl, an das Phenylreste anelliert sind, Aryl (wie z.B. Phenyl und Naphthyl), Aralkyl (wie z.B. Benzyl und Cumenyl), Alkaryl (wie z.B. Methylphenyl, Isopropylphenyl und tert.-Butylphenyl), sowie Cycloalkyl-substituiertes Alkyl (wie z.B. Perhydrocumenyl) sein. Bevorzugte $C_6$-$C_{12}$-Kohlenwasserstoffreste sind Iso-$C_6$-$C_{12}$-Alkyl, Cycloalkyl, Aryl und Aralkyl, besonders bevorzugt Iso-$C_8$-$C_9$-Alkyl, Cyclohexyl, Phenyl, Cumenyl und Perhydrocumenyl, ganz besonders bevorzugt 1,1,3,3-Tetramethylbutyl, Cyclohexyl und Phenyl und insbesondere und 1,1,3,3-Tetramethylbutyl.

Bevorzugt stehen die $C_6$-$C_{12}$-Kohlenwasserstoffreste, tert.-Butyl und 1,1-Dimethylpropyl in den Formeln (I) und (II) für den Substituenten $Y^2$ und die n-$C_1$-$C_5$-Alkyle und Iso-$C_3$-$C_5$-Alkyle außer tert.-Butyl und 1,1-Dimethylpropyl in den Formeln (I) und (II) für die Substituenten $Y^1$ und $Y^3$, wenn es auf die Zugänglichkeit der Komponenten ankommt. Bevorzugt stehen bei Vorhandensein von zwei Kohlenwasserstoffresten und einem Wasserstoff für die Reste $Y^1$, $Y^2$ und $Y^3$ der Formeln (I) und (II) die Kohlenwasserstoffreste für $Y^1$ und $Y^3$, wenn es auf die Wärmestandfestigkeit der erfindungsgemäßen Polycarbonate ankommt. Weiterhin stehen die Reste $C_2$ bis $C_5$-n-Alkyl, $C_6$ bis $C_{12}$-n-Alkyl und $C_6$ bis $C_{12}$-Isoalkyl, wenn vorhanden, bevorzugt für den Rest $Y^2$, wenn $Y^1$ und $Y^2$ oder $Y^1$, $Y^2$ und $Y^3$ in den Formeln (I) und (II) Kohlenwasserstoffreste sind und es auf die Wärmestandfestigkeit der erfindungsgemäßen Polycarbonate ankommt.

Beispiele für Bisphenole der Formel (II) sind:

1,1-Bis-(4-hydroxyphenyl)-3,4-dimethyl-cyclohexan
1,1-Bis-(4-hydroxyphenyl)-3,5-dimethyl-cyclohexan
1,1-Bis-(4-hydroxyphenyl)-3,4,5-trimethyl-cyclohexan
1,1-Bis-(4-hydroxyphenyl)-3-methyl-5-äthyl-cyclohexan
1,1-Bis-(4-hydroxyphenyl)-3-methyl-5-isopropyl-cyclohexan
1,1-Bis-(4-hydroxyphenyl)-3-methyl-5-tert.-butyl-cyclohexan,
1,1-Bis-(4-hydroxyphenyl)-4-methyl-5-tert.-butyl-cyclohexan,
1,1-Bis-(4-hydroxyphenyl)-3,5-di-tert.-butyl-cyclohexan,
1,1-Bis-(4-hydroxyphenyl)-3-methyl-4-phenyl-cyclohexan
1,1-Bis-(4-hydroxyphenyl)-3-methyl-4-cyclohexyl-cyclohexan
1,1-Bis-(3-methyl-4-hydroxyphenyl)-3,5-dimethyl-cyclohexan
1,1-Bis-(3-chlor-4-hydroxyphenyl)-3,5-dimethyl-cyclohexan
1,1-Bis-(3,5-dimethyl-4-hydroxyphenyl)-3,5-dimethyl-cyclohexan
1,1-Bis-(3,5-dimethyl-4-hydroxyphenyl)-3,4-dimethyl-cyclohexan
1,1-Bis-(3,5-dichlor-4-hydroxyphenyl)-3,5-dimethyl-cyclohexan
1,1-Bis-(3,5-dichlor-4-hydroxyphenyl)-3,4-dimethyl-cyclohexan
1,1-Bis-(3,5-dibrom-4-hydroxyphenyl)-3,5-dimethyl-cyclohexan
1,1-Bis-(3,5-dibrom-4-hydroxyphenyl)-3,4-dimethyl-cyclohexan

Bisphenole der Formel (II) sind bekannt z.B aus der US 2069573 oder können nach üblichen Verfahren, z.B. aus entsprechenden Ketonen und Phenolen hergestellt werden.

Die erfindungsgemäßen Polycarbonate enthalten neben den Carbonatstruktureinheiten der Formel (I) jeweils zu 100 Mol-% komplementäre Mengen an anderen difunktionellen Carbonatstruktureinheiten, beispielsweise solche der Formel (III), denen Bisphenole der Formel (IV) zugrundeliegen.

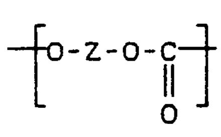

(III)

HO-Z-OH (IV)

Bisphenole der Formel (IV) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (II) oder Heteroatome als Brückenglieder enthalten kann.

Beispiele für Diphenole der Formel (IV) sind

Hydrochinon,
Resorcin,
Dihydroxydiphenyle,
Bis-(hydroxyphenyl)-alkane,

Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise;
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (IV) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Als Verzweiger dienen, falls benutzt, in bekannter Weise geringe Mengen, vorzugsweise Mengen zwischen 0,05 und 2,0 Mol% (bezogen auf eingesetzte Diphenole), an drei- oder mehr als dreifunktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4"-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur Regelung des Molekulargewichts dienen in bekannter Weise monofunktionelle

Verbindungen in üblichen Konzentrationen. Geeignete Verbindungen sind z.B. sekundäre Amine, Phenole und Säurechloride. Bevorzugt werden Phenole, z.B. tert.-Butylphenole oder andere Alkyl-substituierte Phenole. Zur Regelung des Molekulargewichts sind insbesondere kleine Mengen Phenole der Formel (V) geeignet

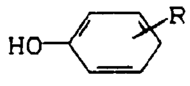

(V)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %.

Einige besonders geeignete Phenole sind Phenol, p-tert.-Butylphenol, Hydroxydiphenyl, p-Cumylphenol und insbesondere p-3,5-Dimethylheptylphenol und m- und p-1,1,3,3-Tetramethylbutylphenol. Die Kettenabbrecher werden im allgemeinen in Mengen von 0,1 bis 10, bevorzugt 0,5 bis 8 Mol-%, bezogen auf eingesetzte Diphenole, eingesetzt.

Die erfindungsgemäßen Polycarbonate können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden.

Hierbei werden die Diphenole der Formel (II) in wäßrig alkalischer Phase gelöst. Zur Herstellung von Co-Polycarbonaten mit anderen Diphenolen werden Gemische von Diphenolen der Formel (II) und den anderen Diphenolen, beispielsweise denen der Formel (IV), eingesetzt. Zur Regulierung des Molekulargewichtes können Kettenabbrecher z.B. der Formel (V) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt im allgemeinen zwischen 0°C und 40°C.

Die gegebenenfalls mitzuverwendenden 0,05 bis 2 Mol-%. an Verzweigern können entweder mit den Diphenolen in der wäßrig alkalischen Phase vorgelegt werden oder in dem organischen Lösungsmittel gelöst vor der Phosgenierung zugegeben werden.

Neben den einzusetzenden Diphenolen der Formel (II) sowie den anderen Diphenolen der Formel (IV) können auch deren Mono- und/oder Bis-chlorkohlensäureester mitver wendet werden, wobei diese in organischen Lösungsmitteln gelöst zugegeben werden. Die Menge an Kettenabbrechern sowie an Verzweigern richtet sich dann nach Molen Diphenolat-Struktureinheiten von (II) und gegebenenfalls von den anderen Di-phenolat-Struktureinheiten wie beispielsweise von (IV); ebenso kann bei Einsatz von Chlorkohlensäureestern die Phosgenmenge in bekannter Weise entsprechend reduziert werden.

Als organische Phase für die Phasengrenzflächenpolykondensation sowie als organische Lösungsmittel für die Lösung der Kettenabbrecher sowie gegebenenfalls für die Verzweiger und die Chlorkohlensäureester können beispielsweise chlorierte Kohlenwasserstoffe, wie Chloroform, Dichlorethan, Di- und Tetrachlorethylen, Tetrachlorethan, Methylenchlorid, Chlorbenzol und Dichlorbenzol, aber auch nicht chlorierte Kohlenwasserstoffe, wie z.B. Toluol und Xylol, sowie Mischungen dieser Lösungsmittel, insbesondere Mischungen aus Methylenchlorid und Chlorbenzol dienen. Gegebenenfalls können die verwendeten Kettenabbrecher und Verzweiger im gleichen Solvens gelöst werden.

Als organische Phase für die Phasengrenzflächenpolykondensation dienen beispielsweise Methylenchlorid, Chlorbenzol oder Toluol sowie Mischungen aus Methylenchlorid und Chlorbenzol.

Als wäßrige alkalische Phase dient beispielsweise wäßrige NaOH-Lösung oder KOH-Lösung.

Die Herstellung der erfindungsgemäßen Polycarbonate nach dem Phasengrenzflächenverfahren kann in üblicher Weise durch Katalysatoren wie tertiäre Amine und Phasentransferkatalysatoren, insbesondere tertiäre aliphatische Amine wie z.B. Tributylamin, Triethylamin, N-Ethylpiperidin und insbesondere quartäre Ammonium- und Phosphoniumverbindungen und Kronenether, wie z.B. Tetrabutylammoniumbromid und Triphenylbenzylphosphoniumbromid katalysiert werden; die Katalysatoren werden im allgemeinen in Mengen von 0,05 bis 30 Mol-%, bezogen auf Mole an eingesetzten Diphenolen, eingesetzt. Die Katalysatoren werden im allgemeinen vor Beginn der Phosgenierung oder während oder auch nach der Phosgenierung zugesetzt.

Die Isolierung der erfindungsgemäßen Polycarbonate erfolgt in bekannter Weise, z.B. indem man die bei den Phasengrenzflächenverfahren erhaltene organische Phase mit dem gelösten Polycarbonat abtrennt, neutral und elektrolytfrei wäscht und dann das Polycarbonat beispielsweise über einen Eindampfextruder als Granulat, oder über Fällung mit Hilfe eines Nichtlösers und anschließende Trocknung oder über eine Sprühverdampfung als Pulver bzw. als Pellets isoliert.

Die erfindungsgemäßen hochmolekularen, thermoplastischen, aromatischen Polycarbonate können auch nach dem bekannten Verfahren in homogener Phase, dem sogenannten "Pyridinverfahren" sowie nach dem bekannten Schmelzum esterungsverfahren unter Verwendung von beispielsweise Diphenylcarbonat anstelle von Phosgen hergestellt werden. Auch hier werden die erfindungsgemäßen Polycarbonate in bekannter Weise isoliert.

Den erfindungsgemäßen Polycarbonaten können noch vor oder während ihrer Verarbeitung zu Formkörpern die für thermoplastische Polycarbonate üblichen Additive wie z.B. Stabilisatoren, Entformungsmittel, Pigmente, Flammschutzmittel, Antistatika, Leitfähigkeitszusätze, Füllstoffe und Verstärkungsstoffe in den üblichen Mengen zugesetzt werden.

Als Brandschutz-Additive kommen in Betracht:

1. Alkali-, Erdalkali- und Ammoniumsalze von aliphatischen und aromatischen Sulfonsäuren, Carbonsäuren und Phosphonsäuren. Diese können in mannigfacher Weise substituiert sein, z.B durch F, Cl, Br, Alkyl. Solche salzartigen Brandschutzmittel können auch oligomer und polymer sein. Salzartige Brandschutzmittel sind u.a. in folgenden Patentanmeldungen beschrieben:
DE-OS 1694640, 1930257, 2049358, 2212987, 2149311, 2253072, 2703710, 2458527, 2458968, 2460786, 2460787, 2460788, 2460935, 2460937, 2460944, 2460945, 2460946, 2461063, 2461077, 2461144, 2461145, 2461146, 2644114, 2645415, 2646120, 2647271, 2648128, 2648131, 2653327, 2744015, 2744016, 2744016, 2744017, 2744018, 2745592, 2948871, 2948439, 3002122.

2. Organische Halogenverbindungen, gegebenenfalls in Kombination mit Synergisten, z.B. halogenierte Aromaten, Solche Substanzen sind u.a. in folgenden Patentanmeldungen beschrieben:
DE-OS 2631756, JA 51-119059, DE-OS 3342636, EP-A 31959, DE-OS 3010375, 2631756.

3. Halogenierte Phthalimide, Phthalimidsulfonate:
DE-OS 2703710, 3203905, 3322057, 3337857, 3023818.

4. Salze von halogenhaltigen Komplexsäuren, z.B. Kryolith, Salze der Tetrafluoroborsäure, der Fluorokieselsäure, beschrieben u.a. in DE-OS 2149311, 3023818.

5. Teilweise oder ganz fluorierte Polyolefine, z.B. beschrieben in DE-OS 2535262, 2915563, 2948439, 3023818.

6. Sulfonamide, Disulfonamide und Salze davon: EP-A 71125, 14322, WO 86/4911.

7. Elementarer Schwefel, roter Phosphor: DE-OS 2435508, 2355211

8. Ferrocen oder dessen Derivate: DE-OS 2644437.

9. Diphenylsulfon: DE-OS 2129204.

10. Nickel-Salze: DE-OS 1918216.

11. Polyphenylensulfid: DE-OS 2503336, EP-A 87038.

12. Alkali- und Erdalkali- sowie Zinksalze von Salzsäure, Schwefelsäure, Phosphorsäure, Salpetersäure, Schwefelwasserstoff, Borsäure sowie auch saure Salze dieser Säuren: WO 87/542, US 4408005, EP-A 174684.

13. Siloxane: DE-OS 2535261.

Als Comonomere, die dem Brandschutz dienen können, sind beschrieben:

1. Chloriertes und bromiertes BPA sowie 4,4′-Dihydroxy-diphenylsulfid: EP-A 31958, 61060.

2. Siloxanblöcke: DE-OS 3334782.

3. Dihydroxy-diphenylsulfone: US 3912688.

4. Sulfoanilid-Endgruppen: EP-A 82483.

Die Brandschutzmaßnahmen können einzeln oder gemeinsam zur Anwendung kommen.

Die Brandschutz-Additive werden einzeln oder zu mehreren gemeinsam vorzugsweise in Extrudern oder Knetern in die Polycarbonate, die Diphenole der Formel I einkondensiert enthalten, eingearbeitet. In vielen Fällen können die Brandschutzmittel den Polycarbonaten schon während der Herstellung oder auch schon den Ausgangsstoffen zugesetzt werden. Weiterhin können die Brandschutzmittel auch Lösungen der Polycarbonate zugegeben werden mit anschließender Einengung der Lösungen zur Trockne. Die Brandschutzmitteladditive werden bevorzugt in Mengen von 0,001 bis 50 Gew.-%, die Brandschutz-Comonomeren bevorzugt in Mengen von 0,1 bis 50 Mol-% verwendet.

Im einzelnen können beispielsweise Graphit, Ruß, Metallfasern, Metallpulver, Kieselgur, Quarz, Talkum, Glimmer, Kaolin, Tone, $CaF_2$, $CaCO_3$, Aluminiumoxide, Glasfasern, C-Fasern, Keramikfasern und organische und anorganische Pigmente zugesetzt werden, sowie als Entformungsmittel beispielsweise Glycerinstearate, Pentaerythrittetrastearat und Trimethylolpropantristearat.

Die erfindungsgemäßen Polycarbonate können nach den Regeln der thermoplastischen Verarbeitung zu Formkörpern verarbeitet werden, indem man beispielsweise die in bekannter Weise isolierten Polycarbonate zu Granulat extrudiert und dieses Granulat gegebenenfalls nach Zusatz der obengenannten Additive z.B. durch Spritzguß, Extrusion, Blasverformen, Rotationsguß oder Warmverpressen, zu verschiedenen Formkörpern in

bekannter Weise verarbeitet. Unter Formkörpern werden auch Fasern, Platten, Folien verstanden. Letztere können auch durch Tiefziehverfahren weiter umgeformt werden. Die Folien können im Verbund mit anderen Folien zu Verbundfolien verarbeitet werden. Weiterhin können die erfindungsge mäßen Polycarbonate auch in anderen Verbundwerkstoffen eingesetzt werden, z.B. in Kombination mit Fasern und anderen Polymeren.

Die erfindungsgemäßen Polycarbonate sind als Formkörper im Elektrosektor sowie im Bausektor mit Vorteil einsetzbar und zwar insbesondere dann, wenn komplizierte Bauteile hoher Wärmeformbeständigkeit verlangt werden.

Beispiel 1

Polycarbonat aus 1,1-Bis-(4-hydroxyphenyl)-3,5-dimethyl-cyclohexan

In 3 l Wasser wurden 184 g (4,6 Mol) NaOH und 296 g (1 Mol) 1,1-Bis-(4-hydroxyphenyl)-3,5-dimethyl-cyclohexan gelöst. Dazu wurden 3 l Methylenchlorid mit darin gelöstem 6,8 g (0,033 Mol) 4-(1,1,3,3-Tetramethyl)butylphenol gegeben. Unter intensivem Rühren wurden dann bei 25°C 148,5 g (1,5 Mol) Phosgen innerhalb von 30 Minuten in das Gemisch eingeleitet. Nach Zugabe von 1,13 g (0,01 Mol) N-Ethylpiperidin wurde das Gemisch 60 Minuten bei 25°C intensiv gerührt. Die bisphenolatfreie alkalisch-wäßrige Phase wurde abgetrennt; die organische Phase nach dem Ansäuern mit verdünnter Phosphorsäure mit Wasser elektrolytfrei gewaschen und eingedampft. Das erhaltene Polycarbonat wurde dann durch Trocknung vom restlichen Methylenchlorid befreit. Es war farblos und zeigte eine relative Viskosität $\eta$rel von 1,326 (gemessen Dichlormethan bei 25°C, c = 5 g Polycarbonat/l Lösung). Die Glastemperatur Tg (nach Differentialthermoanalyse) betrug 229°C.

Beispiel 2

Polycarbonat aus 1,1-Bis-(4-hydroxyphenyl)-3,4-dimethyl-cyclohexan

Die Verfahrensweise des Beispiels 1 wurde wiederholt mit dem Unterschied, daß statt des dort eingesetzten Bisphenols 296 g (1 Mol) 1,1-Bis-(4-hydroxyphenyl)-3,4-dimethyl-cyclohexan verwendet wurden.

Das erhaltene Polycarbonat hatte eine relative Viskosität von 1,331 (gemessen in Dichlormethan bei 25°C, c = 5 g Polycarbonat/l Lösung). Die Glastemperatur Tg (nach Differentialthermoanalyse) war 213°C.

Beispiel 3

Copolymerisat aus Bisphenol-A und 1,1-Bis-(4-hydroxyphenyl)-3,5-dimethyl-cyclohexan im Molverhältnis 1:1

Beispiel 1 wurde wiederholt mit dem Unterschied, daß die Hälfte des dort eingesetzten Bisphenols durch 114 g (0,5 Mol) 2,2-Bis-(4-hydroxyphenyl)-propan (Bisphenol A) ersetzt wurde.

Das erhaltene Polycarbonat hatte eine relative Viskosität $\eta$rel von 1,301 (gemessen in Dichlormethan bei 25°C, c = 5 g Polycarbonat/l Lösung). Die Glastemperatur Tg (nach Differentialthermoanalyse) betrug 196°C.

Beispiel 4

Polycarbonat aus 1,1-Bis-(4-hydroxyphenyl)-3-methyl-5-isopropyl-cyclohexan

Die Verfahrensweise des Beispiels 2 wurde wiederholt mit dem Unterschied, daß statt des dort eingesetzten Bisphenols 324 g (1 Mol) 1,1-Bis-(4-hydroxyphenyl)-3-methyl-5-isopropyl-cyclohexan verwendet wurden.

Das erhaltene Polycarbonat hatte eine relative Viskosität von 1,319 (gemessen in Dichlormethan bei 25°C, c = 5 g Polycarbonat/l Lösung). Die Glastemperatur Tg (nach Differentialthermoanalyse) war 234°C.

Beispiel 5

Polycarbonat aus 1,1-Bis-(4-hydroxyphenyl)-3-methyl-4-phenyl-cyclohexan

Die Verfahrensweise des Beispiels 2 wurde wiederholt mit dem Unterschied, daß statt des dort eingesetzten Bisphenols 358 g (1 Mol) 1,1-Bis-(4-hydroxyphenyl)-3-methyl-4-phenyl-cyclohexan verwendet wurden.

Das erhaltene Polycarbonat hatte eine relative Viskosität von 1,332 (gemessen in Dichlormethan bei 25°C, c = 5 g Polycarbonat/l Lösung). Die Glastemperatur Tg (nach Differentialthermoanalyse) war 239°C.

Beispiel 6

Beispiel A wurde wiederholt, aber 10 Mol-% des Diphenols durch 3,3',5,5'-Tetrabrom-bisphenol A ersetzt. Das erhaltene Polycarbonat zeigte $\eta$rel von 1,302.

Beispiele 7-46

Die Ergebnisse der Brandprüfungen der mit Brandschutzmitteln ausgerüsteten Polycarbonate sind in Tabelle 1 zusammengestellt. Die Brandschutzmittel wurden mit einem Doppelwellenextruder ZSK 32 der Firma Werner & Pfleiderer eingearbeitet.

Das Brandverhalten wurde anhand des $O_2$-Index gemäß ASTM-D 2863-70 beurteilt. Für diese Untersuchungen wurden Prüfstäbe der Abmessungen 80 x 6 x 3 mm durch Spritzgießen hergestellt.

T a b e l l e   1

| Beispiel | Polycarbonat von Beispiel | Brandschutzmittel | Menge, % | $O_2$-Index, % |
|---|---|---|---|---|
| 7 (Vergleich) | 1 | - | - | 23,8 |
| 8 (Vergleich) | 2 | - | - | 24,3 |
| 9 (Vergleich) | 3 | - | - | 24,9 |
| 10 | 6 | - | - | 28,7 |
| 11 | 1 | K-p-Toluolsulfonat | 0,2 | 28,0 |
| 12 | 2 | " | " | 28,7 |
| 13 | 3 | " | " | 28,2 |
| 14 | 6 | " | " | 33,6 |
| | | " | " | 31,0 |
| 15 | 1 | Perfluor-n-butan-K-sulfonat | " | 29,3 |
| 16 | 2 | $CF_3-CO_2-Ca-O_2C-CF_3$ | " | 28,7 |
| 17 | 1 | 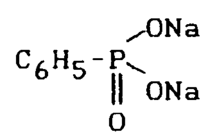 | " | 29,3 |

T a b e l l e 1 (Fortsetzung)

| Beispiel | Polycarbonat von Beispiel | Brandschutzmittel | Menge, % | $O_2$-Index, % |
|---|---|---|---|---|
| 18 | 1 | 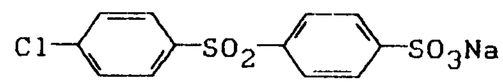 | " | 30,5 |
| 19 | 3 | " | " | 30,8 |
| 20 | 1 | Decabromdiphenyl | 5 | 28,8 |
| 21 | 2 | " | 5 | 29,9 |
| 22 | 1 | " + $Sb_2O_3$ | 5 + 2 | 31,6 |
| 23 | 1 | 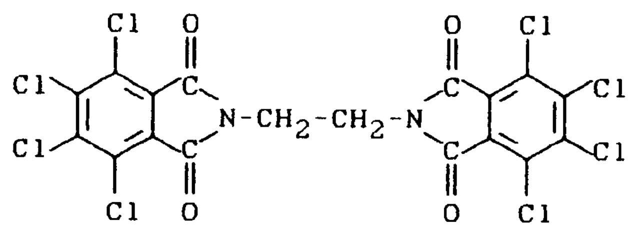 | 3 | 30,4 |
| 24 | 1 | $Na_3AlF_6$ | 0,2 | 29,3 |
| 25 | 3 | " | 0,2 | 30,4 |
| 26 | 3 | " + Polytetrafluorethylen wie Bsp. 27 | 0,2 + 0,1 | 33,5 |

T a b e l l e 1 (Fortsetzung)

| Beispiel | Polycarbonat von Beispiel | Brandschutzmittel | Menge, % | $O_2$-Index, % |
|---|---|---|---|---|
| 27 | 3 | Polytetrafluorethylen, Hostaflon 1740 der Hoechst AG | 0,2 | 26,5 |
| 28 | 1 | Polytetrafluorethylen, Hostaflon 1740 der Hoechst AG | 0,2 | 26,8 |
| 29 | 1 | 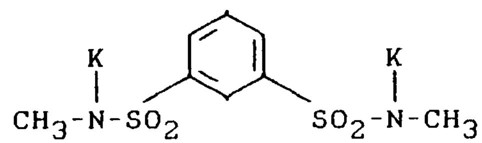 | 0,4 | 29,3 |
| 30 | 1 | Schwefel | 5 | 30,3 |
| 31 | 1 | roter Phosphor, mittlere Teilchen-ø 35 µm | 5 | 35,2 |
| | | " | 5 | 35,8 |
| 32 | 1 | Ferrocen, mittlere Teilchen-ø 28 µm | 0,1 | 27,5 |

T a b e l l e 1 (Fortsetzung)

| Beispiel | Polycarbonat von Beispiel | Brandschutzmittel | Menge, % | $O_2$-Index, % |
|---|---|---|---|---|
| 33 | 1 | Diphenylsulfon | 3 | 27,2 |
| 34 | 1 | Ni-Laurinat | 0,02 | 27,5 |
| 35 | 1 | Polyphenylensulfid gemäß | 10 | 31,2 |
| 36 | 3 | EP-A 171 021 der Schmelze- | 10 | 31,8 |
| | | viskosität 53 Pa.s bei der | | |
| | | Scherrate 100 Pa bei 306° C | | |
| 37 | 1 | $K_2HPO_4$ | 0,2 | 28,3 |
| 38 | 1 | $Li_2SO_4$ | 0,2 | 27,5 |
| 39 | 1 | $NaNo_3$ | 0,2 | 29,9 |
| 40 | 1 | ZnS | 0,5 | 28,2 |
| 41 | 3 | ZnS | 0,5 | 28,8 |
| 42 | 1 | NaHS | 0,2 | 27,1 |
| 43 | 1 | $Na_3B_4O_7$ | 0,2 | 28,4 |

Tabelle 1 (Fortsetzung)

| Beispiel | Polycarbonat von Beispiel | Brandschutzmittel | Menge, % | $O_2$-Index, % |
|---|---|---|---|---|
| 44 | 1 | Polydimethylsiloxan der Viskosität 170 000 mPa.s | 7 | 28,9 |
| 45 | 1 | Polysiloxan-Block-Co-Polycarbonat von Beispiel 3 der DE-OS 3 334 782 | 50 | 28,8 |
| 46 | 2 | K-Salz der Perfluor-n-butansulfonsäure + Polytetrafluorethylen (Beispiel 27) | 0,2 + 0,1 | 33,6 |

**Patentansprüche**

1. Thermoplastische aromatische Polycarbonate mit mittleren Molekulargewichten $\overline{M}w$ von mindestens 10.000, die bifunktionelle Carbonatstruktureinheiten der Formel (I)

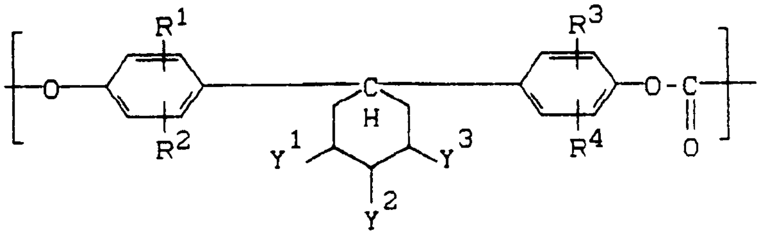

(I)

mit

$R^1$, $R^2$, $R^3$, $R^4$ unabhängig voneinander Wasserstoff, $C_1$ bis $C_{12}$ Kohlenwasserstoff, Halogen

$Y^1$, $Y^2$, $Y^3$ unabhängig voneinander Wasserstoff, $C_1$-$C_5$-Alkyl, $C_6$-$C_{12}$-Kohlenwasserstoffrest, wobei mindestens zwei der Reste $Y^1$, $Y^2$ und $Y^3$ ungleich Wasserstoff und mindestens einer der Reste $Y^1$, $Y^2$ und $Y^3$ $C_1$-$C_5$-Alkyl sind,

in Mengen von 100 bis 1 Mol.-%, bezogen auf die Gesamtmenge von difunktionellen Carbonatstruktureinheiten im Polycarbonat enthalten.

2. Thermoplastische aromatische Polycarbonate des Anspruchs 1, mit Additiven und/oder Comonomeren brandwidrig ausgerüstet.

**Claims**

1. Thermoplastic aromatic polycarbonates having average molecular weights $\overline{M}w$ of at least 10,000 and containing bifunctional aromatic carbonate structural units corresponding to formula (I)

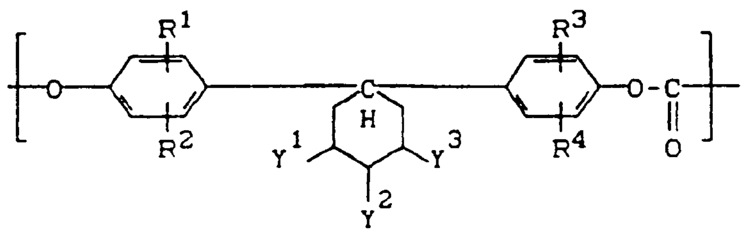

(I)

in which

$R^1$, $R^2$, $R^3$ and $R^4$ independently of one another represent hydrogen, $C_{1-12}$ hydrocarbon, halogen,

$Y^1$, $Y^2$ and $Y^3$ independently of one another represent hydrogen, $C_{1-5}$ alkyl, $C_{6-12}$ hydrocarbon radical, at least two of the substituents $Y^1$, $Y^2$ and $Y^3$ not being hydrogen and at least one of the substituents $Y^1$, $Y^2$ and $Y^3$ being $C_{1-5}$ alkyl,

in quantities of 100 to 1 mol-%, based on the total quantity of difunctional carbonate structural units in the polycarbonate.

2. Thermoplastic aromatic polycarbonates as claimed in claim 1 flameproofed with additives and/or comonomers.

**Revendications**

1. Polycarbonates aromatiques thermoplastiques à poids moléculaire moyen $\overline{M}w$ de 10 000 au moins, contenant des motifs de structure carbonate bifonctionnels de formule I

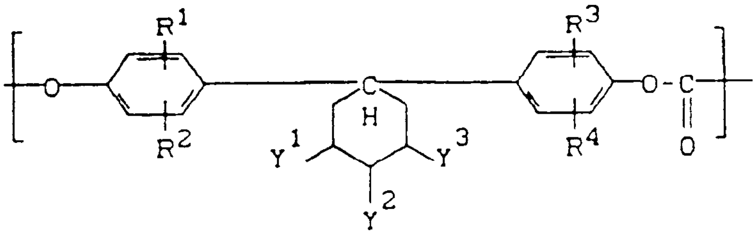

(I)

dans laquelle

$R^1$, $R^2$, $R^3$ et $R^4$ représentent chacun, indépendamment les uns des autres, l'hydrogène, un radical hydrocarboné en $C_1$-$C_{12}$, un halogène,

$Y^1$, $Y^2$, $Y^3$ représentent chacun, indépendamment les uns des autres, l'hydrogène, un groupe alkyle en $C_1$-$C_5$, un radical hydrocarboné en $C_1$-$C_{12}$,

au moins deux des symboles $Y^1$, $Y^2$ et $Y^3$ ayant une signification autre que l'hydrogène et au moins un des symboles $Y^1$, $Y^2$ et $Y^3$ représentant un groupe alkyle en $C_1$-$C_5$, en quantité de 100 à 1 mol% par rapport à la quantité totale des motifs de structure caroonate difonctionnels du polycarbonate.

2. Polycarbonates aromatiques thermoplastiques de la revendication 1, ignifugés par adjonction d'additifs et/ou de comonomères.